# EUROPEAN PATENT APPLICATION

(11) **EP 4 836 488 A1**
(43) Date of publication of application: **04.11.2026**
(21) Application number: 23962723.5
(22) Date of filing: 28.12.2023
(51) Int. Cl.: H04W 24/02

(54) **INFORMATION PROCESSING METHOD, TERMINAL, DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Gunzelmann, Rainer
(86) International application number: PCT/CN2023/142966
(87) International publication number: WO 2025/138044

(57) **Abstract**

Embodiments of the present disclosure provide an information processing method, a terminal, a device, a communication system, and a storage medium. The information processing method is executed by a terminal, and comprises: sending a request, wherein the request is used for requesting sensing information. In this way, the terminal can learn sensing information related to a sensing task, thereby facilitating knowing of whether there is a potential sensing task.

## Description

### FIELD

The present invention relates to the field of communication technology, and in particular to a method, terminal, device, communication system, and storage medium for information processing.

### BACKGROUND

Wireless sensing technology aims at detecting and/or acquiring features of a remote object without physical contact. Perception data of the object and its surrounding can be utilized for analysis, so that effective features and/or effective information about the object can be obtained.

### SUMMARY

Embodiments of the present invention need to solve the problem that a terminal cannot detect a potential sensing task.

According to a first aspect of embodiments of the present invention, a method for information processing is provided, which is performed by a terminal and includes: sending a request, where the request is configured for requesting sensing information.

According to a second aspect of embodiments of the present invention, a method for information processing is provided, which is performed by a first device and includes: receiving a request, where the request is configured for requesting sensing information.

According to a third aspect of embodiments of the present invention, a method for information processing is provided, which is performed by a second device and includes: receiving a request, where the request is configured for requesting sensing information.

According to a fourth aspect of embodiments of the present invention, a method for information processing is provided, which includes: sending, by a terminal, a request to a network device, where the request is configured for requesting sensing information.

According to a fifth aspect of embodiments of the present invention, a terminal is provided, which includes: a first transceiver module, configured to send a request, where the request is configured for requesting sensing information.

According to a sixth aspect of embodiments of the present invention, a first device is provided, which includes: a second transceiver module, configured to receive a request, where the request is configured for requesting sensing information.

According to a seventh aspect of embodiments of the present invention, a second device is provided, which includes: a third receiving module, configured to receive a request, where the request is configured for requesting sensing information.

According to an eighth aspect of embodiments of the present invention, a communication device is provided, which includes one or more processors; and the communication device is configured to perform the method as described in the first aspect, the second aspect, the third aspect or the fourth aspect, or to perform the method as described in optional implementation manners of the first aspect, the second aspect, the third aspect or the fourth aspect.

According to a ninth aspect of embodiments of the present invention, a communication system is provided, which includes: a terminal, a first device and/or a second terminal; the terminal is configured to perform the method as described in optional implementation manners of the first aspect, the first device is configured to perform the method as described in optional implementation manners of the second aspect, and the second device is configured to perform the method as described in optional implementation manners of the third aspect.

According to a tenth aspect of embodiments of the present invention, a storage medium is provided, which has stored therein instructions that, when run on a communication device, cause the communication device to perform the method as described in the first aspect, the second aspect, the third aspect or the fourth aspect, or to perform the method as described in optional implementation manners of the first aspect, the second aspect, the third aspect or the fourth aspect.

Embodiments of the present invention enable a terminal to detect a potential sensing task.

### BRIEF DESCRIPTION OF THE DRAWINGS

In order to more clearly illustrate technical solutions in embodiments of the present invention, drawings needed for the description of embodiments will be briefly introduced below. The drawings described below only involve some embodiments of the present invention and do not impose specific limitations on the protection scope of the present invention.
FIG. 1 is a schematic diagram showing an information processing system according to embodiments of the present invention.
FIG. 2A is a schematic interactive diagram of a method for information processing according to embodiments of the present invention.
FIG. 2B is a schematic interactive diagram of a method for information processing according to embodiments of the present invention.
FIG. 2C is a schematic interactive diagram of a method for information processing according to embodiments of the present invention.
FIG. 3A is a schematic flowchart of a method for information processing according to embodiments of the present invention.
FIG. 3B is a schematic flowchart of a method for information processing according to embodiments of the present invention.
FIG. 4A is a schematic flowchart of a method for information processing according to embodiments of the present invention.
FIG. 4B is a schematic flowchart of a method for information processing according to embodiments of the present invention.
FIG. 4C is a schematic flowchart of a method for information processing according to embodiments of the present invention.
FIG. 4D is a schematic flowchart of a method for information processing according to embodiments of the present invention.
FIG. 4E is a schematic flowchart of a method for information processing according to embodiments of the present invention.
FIG. 5A is a schematic flowchart of a method for information processing according to embodiments of the present invention.
FIG. 5B is a schematic flowchart of a method for information processing according to embodiments of the present invention.
FIG. 5C is a schematic flowchart of a method for information processing according to embodiments of the present invention.
FIG. 5D is a schematic flowchart of a method for information processing according to embodiments of the present invention.
FIG. 5E is a schematic flowchart of a method for information processing according to embodiments of the present invention.
FIG. 6 is a schematic flowchart of a method for information processing according to embodiments of the present invention.
FIG. 7 is a schematic flowchart of a method for information processing according to embodiments of the present invention.
FIG. 8A is a schematic block diagram of a terminal according to embodiments of the present invention.
FIG. 8B is a schematic block diagram of a first device according to embodiments of the present invention.
FIG. 8C is a schematic block diagram of a second device according to embodiments of the present invention.
FIG. 9A is a schematic block diagram of a communication device according to embodiments of the present invention.
FIG. 9B is a schematic block diagram of a chip according to embodiments of the present invention.

### DETAILED DESCRIPTION

Embodiments of the present invention provide a method, terminal, device, communication system, and storage medium for information processing.

In a first aspect, embodiments of the present invention provide a method for information processing, which is performed by a terminal and includes: sending a request, where the request is configured for requesting sensing information.

In above embodiments, the terminal sends the request, so that the terminal may obtain sensing information related to a sensing task, so as to enable the terminal to know whether there is a potential sensing task.

In combination with some embodiments of the first aspect, in some embodiments, the request includes first indication information; and the first indication information indicates a request for the sensing information.

In above embodiments, the first indication information may be included in the request to obtain the sensing information, without the need of sending a new request to obtain the sensing information, thereby reducing signaling overhead and improving the utilization rate of a message including the request.

In combination with some embodiments of the first aspect, in some embodiments, sending the request includes at least one of: sending a first request to a first device; sending a second request to a second device via a first device; or sending a third request to a second device.

In above embodiments, the terminal may send a request to the first device or the second device, so that the terminal may detect whether there is a potential sensing task with the help of the first device or the second device.

In combination with some embodiments of the first aspect, in some embodiments, the method further includes: receiving a response, and the response includes the sensing information.

In above embodiments, the terminal receives the response to obtain the sensing information, which is beneficial for the terminal to detect whether there is a potential sensing task.

In combination with some embodiments of the first aspect, in some embodiments, the sensing information includes at least one of: second indication information, indicating whether there is a sensing task; region information, indicating a region where there is a sensing task; or time information, indicating a time period of a sensing task.

In above embodiments, the sensing information includes the second indication information, which enables the terminal to accurately know whether there is a potential sensing task; and/or the sensing information includes the region information, which enables the terminal to accurately know in which region(s) the terminal is located there is a potential sensing task; and/or the sensing information includes the time information, which enables the terminal to accurately know in which time period (s) there is a potential sensing task.

In combination with some embodiments of the first aspect, in some embodiments, receiving the response includes at least one of: receiving a first response sent by a first device; receiving, via a first device, a second response sent by a second device; or receiving a third response sent by a second device.

In above embodiments, the terminal may receive a response from the first device or the second device, etc., so that the terminal may detect whether there is a potential sensing task with the help of the first device or the second device, and the method may be applied to more application scenarios.

In combination with some embodiments of the first aspect, in some embodiments, the first device is a base station or an access and mobility management function (AMF); and/or the second device is a sensing function (SF), a location management function (LMF), a gateway mobile location center (GMLC) or other network functions specifically set up for a sensing service.

In above embodiments, since the first device is a base station or an AMF, the terminal may detect whether there is a potential sensing task with the help of an access network device or a core network device; and/or since the second device is an SF, an LMF, a GMLC or other network functions specially set up for a sensing service, the terminal may detect whether there is a potential sensing task with the help of the SF, the LMF, the GMLC or other network functions specially set up for a sensing service.

In a second aspect, embodiments of the present invention provide a method for information processing, which is performed by a first device and includes: receiving a request, where the request is configured for requesting sensing information.

In combination with some embodiments of the second aspect, in some embodiments, the request includes first indication information; and the first indication information indicates a request for the sensing information.

In combination with some embodiments of the second aspect, in some embodiments, receiving the request includes at least one of: receiving a first request sent by a terminal; or receiving a second request sent by a terminal, where the second request is configured to be sent to a second device.

In combination with some embodiments of the second aspect, in some embodiments, the method further includes: sending the second request to the second device.

In combination with some embodiments of the second aspect, in some embodiments, the method includes: sending a fourth request to a second device, and the fourth request is configured for requesting sensing information.

In above embodiments, the first device may receive the fourth request sent by the second device, so as to push the sensing information to the second device.

In combination with some embodiments of the second aspect, in some embodiments, the method further includes: receiving a fourth response sent by the second device, and the fourth response includes the sensing information.

In above embodiments, the first device may send the fourth response to the second device, so as to push the sensing information to the second device, i.e., send the sensing information to the second device that needs to do sensing task detection, so as to facilitate the second device to detect whether there is a potential sensing task.

In combination with some embodiments of the second aspect, in some embodiments, the method further includes: receiving a fifth request sent by a second device, and the fifth request is configured for obtaining sensing information.

In above embodiments, the first device that needs to do sensing task detection sends the fifth request to the second device, so as to request the sensing information from the second device.

In combination with some embodiments of the second aspect, in some embodiments, the method further includes: sending a fifth response to the second device, and the fifth response includes the sensing information.

In above embodiments, the first device that needs to do the sensing task detection receives the fifth response sent by the second device, so as to obtain the sensing information and accurately determine whether there is a potential sensing task.

In combination with some embodiments of the second aspect, in some embodiments, the method further includes one of: determining whether there is a sensing task according to sensing information stored in the first device; or determining whether there is a sensing task according to sensing information obtained from a fourth response.

In combination with some embodiments of the second aspect, in some embodiments, the method further includes one of: sending a first response to a terminal, where the first response includes the sensing information; or sending a second response to a terminal, where the second response includes the sensing information, and the second response is received by a second device from the first device.

In combination with some embodiments of the second aspect, in some embodiments, the sensing information includes at least one of: second indication information, indicating whether there is a sensing task; region information, indicating a region where there is a sensing task; or time information, indicating a time period of a sensing task.

In combination with some embodiments of the second aspect, in some embodiments, the first device is a base station or an AMF; and/or the second device is an SF, an LMF, a GMLC or other network functions specifically set up for a sensing service.

In a third aspect, embodiments of the present invention provide a method for information processing, which is performed by a second device, and includes: receiving a request, and the request is configured for requesting sensing information.

In combination with some embodiments of the third aspect, in some embodiments, the request includes first indication information; and the first indication information indicates a request for the sensing information.

In combination with some embodiments of the third aspect, in some embodiments, receiving a request includes at least one of: receiving a second request sent by a first device; where the second request is sent by a terminal to the first device; or receiving a third request sent by a terminal.

In combination with some embodiments of the third aspect, in some embodiments, the method further includes: receiving a fourth request sent by a first device, and the fourth request is configured for requesting sensing information.

In combination with some embodiments of the third aspect, in some embodiments, the method further includes: sending a fourth response to the first device, and the fourth response includes the sensing information.

In combination with some embodiments of the third aspect, in some embodiments, the method further includes: sending a fifth request to a first device, and the fifth request is configured for obtaining sensing information.

In combination with some embodiments of the third aspect, in some embodiments, the method further includes: receiving a fifth response sent by the first device, and the fifth response includes the sensing information.

In combination with some embodiments of the third aspect, in some embodiments, the method further includes one of: determining whether there is a sensing task according to sensing information stored in the second device; or determining whether there is a sensing task according to sensing information obtained from a fifth response.

In combination with some embodiments of the third aspect, in some embodiments, the method further includes one of: sending a second response to a first device, where the second response includes the sensing information, and the second response is configured to be sent to a terminal by the first device; or sending a third response to a terminal, where the third response includes the sensing information.

In combination with some embodiments of the third aspect, in some embodiments, the sensing information includes at least one of: second indication information, indicating whether there is a sensing task; region information, indicating a region where there is a sensing task; or time information, indicating a time period of a sensing task.

In combination with some embodiments of the third aspect, in some embodiments, the first device is a base station or an AMF; and/or the second device is an SF, an LMF, a GMLC or other network functions specifically set up for a sensing service.

In a fourth aspect, embodiments of the present invention provide a method for information processing, which includes: sending, by a terminal, a request to a network device, where the request is configured for requesting sensing information.

In a fifth aspect, embodiments of the present invention provide a terminal, which includes: a first transceiver module, configured to send a request, where the request is configured for requesting sensing information.

In a sixth aspect, embodiments of the present invention provide a first device, which includes: a second transceiver module, configured to receive a request, where the request is configured for requesting sensing information.

In a seventh aspect, embodiments of the present invention provide a second device, which includes: a third receiving module, configured to receive a request, where the request is configured for requesting sensing information.

In an eighth aspect, embodiments of the present invention provide a communication device, which includes one or more processors; and the communication device is configured to perform the method as described in the first aspect, the second aspect, the third aspect or the fourth aspect, or to perform the method as described in optional implementation manners of the first aspect, the second aspect, the third aspect or the fourth aspect.

In a ninth aspect, embodiments of the present invention provide a communication system, which includes: a terminal, a first device and/or a second terminal; the terminal is configured to perform the method as described in optional implementation manners of the first aspect, the first device is configured to perform the method as described in optional implementation manners of the second aspect, and the second device is configured to perform the method as described in optional implementation manners of the third aspect.

In a tenth aspect, embodiments of the present invention provide a storage medium, which has stored therein instructions that, when run on a communication device, cause the communication device to perform the method as described in the first aspect, the second aspect, the third aspect or the fourth aspect, or to perform the method as described in optional implementation manners of the first aspect, the second aspect, the third aspect or the fourth aspect.

In an eleventh aspect, embodiments of the present invention provide a program product that, when executed by a communication device, causes the communication device to perform the method as described in the first aspect, the second aspect, the third aspect or the fourth aspect, or to perform the method as described in optional implementation manners of the first aspect, the second aspect, the third aspect or the fourth aspect.

In a twelfth aspect, embodiments of the present invention provide a computer program that, when run on a computer, causes the computer to perform the method as described in the first aspect, the second aspect, the third aspect or the fourth aspect, or to perform the method as described in optional implementation manners of the first aspect, the second aspect, the third aspect or the fourth aspect.

In a thirteenth aspect, embodiments of the present invention provide a chip or a chip system; the chip or chip system includes a processing circuit configured to perform the method as described in the first aspect, the second aspect, the third aspect or the fourth aspect, or to perform the method as described in optional implementation manners of the first aspect, the second aspect, the third aspect or the fourth aspect.

It is understandable that the above-described network device, terminal, device (such as the first device and/or the second device), communication system, storage medium, program product, computer program, chip or chip system each are configured to perform the method according to embodiments of the present invention. Therefore, for beneficial effects that are achievable by them, reference may be made to that achieved by the respective methods, which will not be elaborated here.

Embodiments of the present invention provide a method, a network device, a terminal, a device, a communication system and a storage medium for information processing. In some embodiments, terms like "method for information processing", "method for information processing" and "communication method" are interchangeable, terms like "device for information processing", "information processing device" and "communication device" are interchangeable, and terms "system for information processing", "information processing system" and "communication system" are interchangeable.

Embodiments of the present invention are not exhaustive, but are examples of some embodiments, and are not intended to constitute a limitation on the scope of protection of the present invention. In the absence of contradiction, each step in a certain embodiment may be implemented as an independent embodiment, and various steps may be arbitrarily combined. For example, a solution obtained after removing one or more steps from a certain embodiment may also be implemented as an independent embodiment, and steps in a certain embodiment may be arbitrarily exchanged in order. In addition, optional implementation manners in a certain embodiment may be arbitrarily combined. In addition, various embodiments may be arbitrarily combined, for example, some or all of the steps of different embodiments may be arbitrarily combined, and a certain embodiment may be arbitrarily combined with an optional implementation manner of other embodiments.

In various embodiments of the present invention, unless specified otherwise or there is a logical conflict, terms and/or descriptions among various embodiments are of consistency and may be referenced to each other, and technical features in different embodiments may be combined to form a new embodiment based on their internal logical relationships.

Terms used in embodiments of the present invention are for the purpose of describing specific embodiments and are not intended to limit the present invention.

In embodiments of the present invention, unless specified otherwise, an element expressed in the singular form, such as expressed with words like "a", "an", "the", "described above", "said", "aforementioned", "this", etc., may mean "one and only one", or mean "one or more", "at least one", etc. For example, a noun after an article like "a", "an", "the" in English may be understood as a singular expression or a plural expression.

In embodiments of the present invention, "a plurality of" refers to two or more.

In some embodiments, phrases like "at least one", "at least one of", "one or more", "a plurality of", "multiple", etc. may be used interchangeably.

In some embodiments, expressions like "at least one of A or B", "A and/or B", "A in a case, B in another case", "A in response to a case, B in response to another case", etc., may include the following technical solutions depending on situations: A in some embodiments (A is performed independently of B); B in some embodiments (B is performed independently of A); in some embodiments, selection is made from A and B (A and B are selectively performed); both A and B in some embodiments (both A and B are performed). The same applies when there are more branches such as A, B, and C.

In some embodiments, the expression "A or B" may include the following technical solutions depending on situations: A in some embodiments (A is performed independently of B); B in some embodiments (B is performed independently of A); in some embodiments, selection is made from A and B (A and B are selectively performed). The same applies when there are more branches such as A, B, and C.

The prefixes such as "first" and "second" in embodiments of the present invention are used to distinguish different objects described, and do not constitute restrictions on the position, order, priority, quantity or content of the described objects. The statement for the described objects refers to the description in the context of the claims or embodiments, and the use of prefixes should not bring unnecessary restrictions. For example, if the described objects are "fields", such as "first field" and "second field", the ordinal numbers, i.e., "first" and "second", before these "fields" do not limit positions or order of these "fields", and the "first" and "second" do not limit whether the "fields" they define are in the same message, nor do they limit the order of the "first field" and the "second field". For another example, if the described objects are "levels", such as "first level" and "second level", the ordinal numbers before these "levels" do not limit the priority between these "levels". For another example, the number of the described object is not limited by the ordinal number, the number of the described object may be one or more. Taking "first apparatus" as an example, the number of the "apparatus" may be one or more. In addition, the objects defined by different prefixes may be the same or different. For example, if the described object is "apparatus", then "first apparatus" and "second apparatus" may be the same apparatus or different apparatuses, and their types may be the same or different. For another example, if the described object is "information", then "first information" and "second information" may be the same information or different information, and their contents may be the same or different.

In some embodiments, "including A", "comprising A", "used to indicate A", and "carrying A" may be interpreted as "directly carrying A" or "indirectly indicating A".

In some embodiments, phrases such as "in response to...", "in response to determining...", "in a case where...", "in case of...", "upon...", "when...", "if...", etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "smaller than", "smaller than or equal to", "not greater than", "less than", "less than or equal to", "no more than", "lower than", "lower than or equal to", "not higher than", and "below" may be replaced with each other.

In some embodiments, an apparatus or the like may be interpreted as physical or virtual, and its name is not limited to those recorded in embodiments. Terms such as "apparatus", "equipment", "device", "circuit", "network element", "node", "function", "unit", "section", "system", "network", "chip", "chip system", "entity", and "body" may be used interchangeably.

In some embodiments, "network" may be interpreted as the devices included in the network, for example, access network device, core network device, etc.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel (panel)", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, terms such as "terminal", "terminal device", "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced by a terminal. For example, the communication between a terminal and an access network device, a core network device or a network device may be replaced by the communication structure among terminals (may also be referred to as for example device-to-device (D2D), vehicle-to-everything (V2X), etc.), which may also apply various embodiments of the present invention. In this case, a structure may be set in which the terminal has all or part of functions of the access network device. In addition, terms such as "uplink" and "downlink" may also be replaced by a term (e.g., "side") corresponding to the communication among terminals. For example, an uplink channel, a downlink channel, etc. may be replaced by a side channel, and an uplink, a downlink, etc. may be replaced by a sidelink.

In some embodiments, a terminal may be replaced by an access network device, a core network device, or a network device. In this case, a structure may be set in which the access network device, the core network device, or the network device has all or part of functions of the terminal.

In some embodiments, acquisition of data, information, etc. may comply with the laws and regulations of the country where the activity takes place.

In some embodiments, data, information, etc. may be obtained with the user's consent.

In addition, each element, each row, or each column in the table of embodiments of the present invention may be implemented as an independent embodiment, and the combination of any element, any row, and/or any column may also be implemented as an independent embodiment.

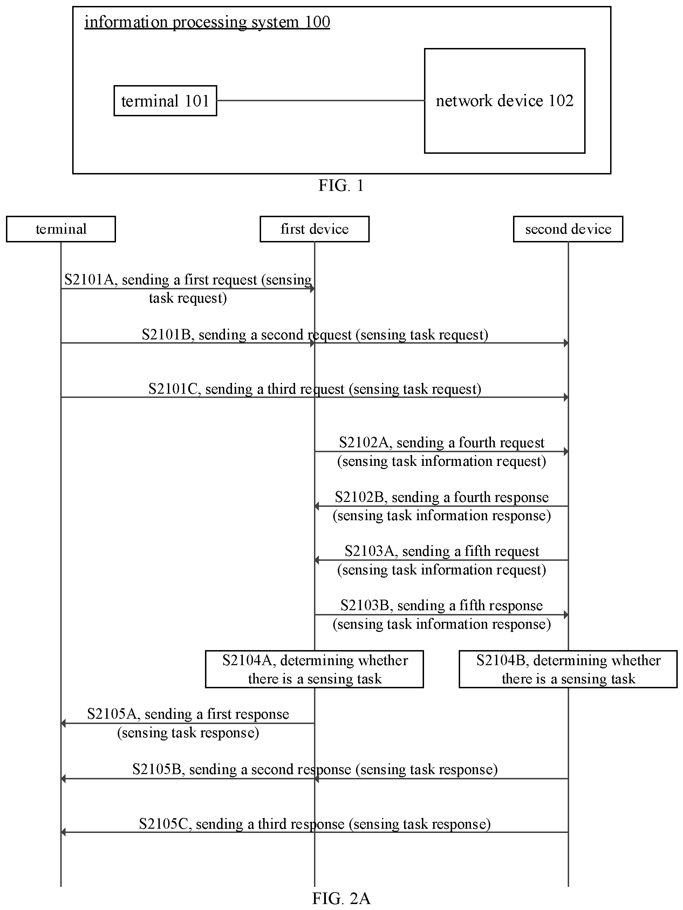

FIG. 1 is a schematic architecture diagram of an information processing system 100 according to embodiments of the present invention. As shown in FIG. 1, the information processing system 100 may include a terminal 101 and a network device 102.

In some embodiments, the network device 102 may include at least one of: an access network device or a core network device.

In some embodiments, the terminal 101 includes, for example, at least one of a mobile phone, a wearable device, an Internet of Things (IOT) device or terminal, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the access network device is for example a node or device that connects a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited thereto.

In some embodiments, the technical solutions of the present invention are applicable to an Open RAN architecture. In this case, interfaces between access network devices or within an access network device involved in embodiments of the present invention may be internal interfaces of the Open RAN, and the processes and information exchange between these internal interfaces may be implemented through software or programs.

In some embodiments, the access network device may be composed of a central unit (CU) and distributed units (DUs), where the CU may also be referred to as a control unit. The CU-DU structure allows to split protocol layers of the access network device, functions of some protocol layers are set in the CU for centralized control, functions of some or all of the remaining protocol layers are distributed in DUs, and the DUs are centrally controlled by the CU, but the present invention is not limited thereto.

In some embodiments, the core network device may be a single device, including a first device, a second device, etc., or may include multiple devices or a group of device groups, which include all or part of the first device and the second device, respectively. The first device and the second device each may be a network element, and the network element may be virtual or physical. The core network includes for example at least one of an evolved packet core (EPC), a 5G core network (5GCN), or a next generation core (NGC).

In some embodiments, the first device is, for example, a base station or an AMF, but its name is not limited thereto.

In some embodiments, the first device is, for example, an SF, but its name is not limited thereto.

It may be understood that the information processing system described in embodiments of the present invention is for the purpose of more clearly illustrating technical solutions of embodiments of the present invention, and does not constitute a limitation on the technical solutions proposed in embodiments of the present invention. A person of ordinary skill in the art knows that with the evolution of the system architecture and the emergence of new service scenarios, the technical solutions proposed in embodiments of the present invention are also applicable to similar technical problems.

The following embodiments of the present invention may be applied to an information processing system 100 or some of entities shown in FIG. 1, but are not limited thereto. The entities shown in FIG. 1 are examples, and the information processing system may include all or part of the entities in FIG. 1, or may include other entities not shown in FIG. 1, and the number and form of each kind of entity are arbitrary. The connection relationship among the entities is an example, these entities may be connected or disconnected with each other, and the connection may be in any manner, either a direct connection or an indirect connection, or either a wired connection or a wireless connection.

Various embodiments of the present invention may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, next-generation systems expanded based thereon, etc. In addition, multiple systems may be combined (for example, a combination of LTE or LTE-A and 5G) for application.

In some embodiments, the wireless sensing technology may include radar (radio detection and ranging) technology that uses radio waves to determine a distance (range), angle, or instantaneous velocity of objects. Optionally, the wireless sensing technology also includes other sensing technologies, such as non-RF sensing technology; and the non-RF sensing technology has been applied in various areas like time-of-flight (ToF) cameras, accelerometers, gyroscopes and/or laser radars.

In some embodiments, integrated sensing and communication means the sensing capabilities are provided by the same wireless communication system and infrastructure (e.g., base station) as used for communication. Optionally, both UE and NR RAN node can serve as a sensing transmitter and/or a sensing receiver in a sensing system.

In some embodiments, some examples of communication assisted sensing services are provided as follows.

Example 1: environment real-time monitoring. In environment real-time monitoring, wireless signals may be used to reconstruct an environment map to further improve positioning accuracy and enable environment related applications. For example, real-time monitoring related applications includes dynamic 3D map for driving assistance, pedestrian flow statistics, intrusion detection, and/or traffic detection, etc.

Example 2: autonomous vehicle/unmanned aerial vehicle. The autonomous vehicle/unmanned aerial vehicle applications have some common functional requirements. For example, the autonomous vehicle/unmanned aerial vehicle shall support Detect and Avoid (DAA) to avoid obstacles. Optionally, the autonomous vehicle/unmanned aerial vehicle shall have the capability to monitor path information, like selecting routes and/or complying with traffic regulations.

Example 3: air pollution monitoring. The quality of received wireless signals displays different attenuation characteristics with changes in air humidity, air particulate matter (PM) concentration, and/or carrier frequency, etc., which may be used for weather or air quality detection.

Example 4: indoor health care and intrusion detection. The indoor health care and intrusion detection may realize respiration rate estimation, breathing depth estimation, apnoea detection, elders' vital sign monitoring and/or indoor intrusion detection, etc.

In some embodiments, sensing of wireless communication channels and environment could further improve the performance of communication systems. Optionally, some examples of sensing assisted communication scenarios are provided as follows.

Example 1: sensing UE's location and/or channel environment to narrow a beam sweeping range and shorten the beam training time.

Example 2: sensing UE's location, velocity, motion trajectory and/or channel environment for beam prediction may reduce the overhead of beam measurement and the delay of beam tracking.

Example 3: sensing UE's property and/or channel environment to improve the performance of channel estimation.

In some embodiments, in a sensing scenario, humans can be sensed by a UE or a base station in an unaware way. Since the UE can run a sensing task by itself, the UE may obtain sensitive information (e.g., heart rate) about the human via the sensing procedure even if the UE is not within network coverage. To avoid being sensed in an unaware manner, human should be able to leverage their UEs to detect a potential sensing task. However, currently, there is no existing mechanism to enable the UE to detect a potential sensing task.

Optionally, the UE may be the terminal in previous embodiments.

FIG. 2A is a schematic interactive diagram of a method for information processing according to embodiments of the present invention. As shown in FIG. 2A, the method for information processing involved in embodiments of the present invention is applicable to the information processing system 100, and the method includes one or more of the following operations.

In some embodiments, a terminal sends a request. Optionally, sending the request by the terminal may be a step S2101; and the step S2101 includes a step S2101A, a step S2101B and/or a step S2101C. Optionally, the request includes a first request, a second request and/or a third request.

In some embodiments, the request is configured for requesting sensing information. Optionally, the request may be any existing message or signaling, or the request may be a newly defined message or signaling.

In some embodiments, the request includes first indication information, and the first indication information indicates a request for the sensing information. Optionally, the first indication information may include one or more bits. The first indication information is a predetermined bit or a predetermined field in the request.

In some embodiments, the request is configured for requesting detection of a sensing task. Optionally, the terminal sends a request to a first device, and the request is configured for requesting whether the first device has a sensing task.

In some embodiments, the name of the request is not limited, and it may be, for example, a sensing task request, a sensing task information request, or a sensing task detection request, etc.

In some embodiments, the sensing information may be information related to the sensing task; or the sensing information may be result information of whether there is a sensing task.

In some embodiments, the sensing information may include at least one of: second indication information, region information, or time information.

Optionally, the second indication information indicates whether there is a sensing task. For example, the second indication information may be one or more bits. For example, in a case where the second indication information has a first value, such as "1" or "11", it may indicate that there is a sensing task; or in a case where the second indication information has a second value, such as "0" or "00", it may indicate that there is no sensing task.

Optionally, the region information indicates a region where there is a sensing task. For example, the region information may indicate a first region where there is a sensing task and/or a second region where there is no sensing task. For example, in a case where the region information has a third value, it indicates the first region where there is a sensing task, and/or in a case where the region information has a fourth value, it indicates the second region where there is no sensing task. Different bits with the third value indicate different first regions; and different bits with the fourth value indicate different second regions. Here, a region may be any geographical location, for example, it may be a range of a certain longitude and latitude, a certain area or city, a certain building, or a certain one or more cells, etc.

Optionally, the time information indicates a time period of a sensing task. For example, the time information may indicate a first time period when there is a sensing task and/or a second time period when there is no sensing task. For example, in a case where the time information has a fifth value, it indicates the first time period when there is a sensing task, and/or in a case where the time information has a sixth value, it indicates the second time period when there is no sensing task. Different bits with the fifth value indicate different first time periods; different bits with the sixth value indicate different second time periods. Here, the time period may be any time length, for example, it may be a time period from 8:00 a.m. to 9:00 a.m., a time period from 12:00 noon to 1:30 p.m., a time period from 22:00 to 24:00 in the evening, etc.

In some embodiments, the name of the sensing information is not limited, and it may be, for example, sensing task information, sensing region, sensing time period, sensing task result information, etc.

Optionally, the request may further include a first identifier. The first identifier may be: a generic public subscription identifier (GPSI) of the terminal, a subscription permanent identifier (SUPI) of the terminal, or any No., index or character string indicating the terminal, etc. In this way, it is possible to know which terminal needs to request a potential sensing task.

Optionally, the sensing information may further include a second identifier. The second identifier may be any No., index, or character string indicating the first device or the second device. In this way, it is possible to know which device is involved in the sensing task.

Optionally, the sensing service may be any service related to wireless sensing technology. For example, the sensing service may be an environment monitoring service, an air monitoring service, a crop monitoring service, a traffic monitoring service, a terminal location monitoring service, a terminal channel and/or beam monitoring service, etc.

In step S2101A, the terminal sends a first request to the first device.

In some embodiments, the first device receives the first request sent by the terminal.

Optionally, the first request is configured for requesting sensing information.

Optionally, the first request includes first indication information.

In some embodiments, the first device is a base station or an AMF.

Optionally, in a case where the first device is an AMF, information between the AMF and the terminal may be forwarded via a base station. For example, in a case where the first device is a base station, the terminal sends the first request to the base station. For example, in a case where the first device is an AMF, the first device sends the first request to a base station, and the base station forwards the first request to the AMF.

In step S2101B, the terminal sends a second request to a second device via a first device.

In some embodiments, the second device receives the second request sent by the terminal via the first device.

Optionally, the terminal sends the second request to the first device, and the first device forwards the second request to the second device.

Optionally, the second device receives the second request sent by the first device, and the second request is received by the first device from the terminal.

Optionally, the second request is configured for requesting sensing information.

Optionally, the second request includes first indication information.

In step S2101C, the terminal sends a third request to a second device.

In some embodiments, the second device receives the third request sent by the terminal.

Optionally, the third request is configured for requesting sensing information.

Optionally, the third request includes first indication information.

In some optional embodiments, the first device sends a request. Optionally, the first device receives a second request sent by the terminal, and sends the second request to the second device.

In step S2102A, the first device sends a fourth request to a second device.

In some embodiments, the second device receives the fourth request sent by the first device.

Optionally, the fourth request is configured for requesting sensing information.

Optionally, the fourth request may include first indication information.

In some embodiments, the name of the fourth request is not limited, and it may be, for example, a sensing task information request, etc.

In step S2102B, the second device sends a fourth response to the first device.

In some embodiments, the first device receives the fourth response sent by the second device.

Optionally, the fourth response includes the sensing information.

In some embodiments, the name of the fourth response is not limited, and it may be, for example, a sensing task information response, etc.

In some embodiments, a step S2102 may include the step S2102A and the step S2102B in the above embodiments.

In step S2103A, the second device sends a fifth request to the first device.

In some embodiments, the first device receives the fifth request sent by the second device.

Optionally, the fifth request is configured for requesting sensing information.

Optionally, the fifth request may include first indication information.

In some embodiments, the name of the fifth request is not limited, and it may be, for example, a sensing task information request, etc.

In step S2103B, the first device sends a fifth response to the second device.

In some embodiments, the second device receives the fifth response sent by the first device.

In some embodiments, the fifth response includes the sensing information.

In some embodiments, the name of the fifth response is not limited, and it may be, for example, a sensing task information response, etc.

In some embodiments, a step S2103 may include the step S2103A and the step S2103B in the above embodiments.

In step S2104A, the first device determines whether there is a sensing task.

In some embodiments, the first device determines whether there is a sensing task according to the sensing information. Optionally, the sensing information is stored in the first device or obtained from the fourth response.

Optionally, the first device determines whether there is a sensing task according to the sensing information stored in the first device.

Optionally, the first device determines whether there is a sensing task according to the sensing information obtained from the fourth response.

For example, in a case where the first device determines that the first indication information included in the sensing information indicates that there is a sensing task, it determines that there is a sensing task; or in a case where the first device determines that the first indication information included in the sensing information indicates that there is no sensing task, it determines that there is no sensing task.

For example, in a case where the first device determines that the region information included in the sensing information indicates that there is a sensing task in the first region, and the first device is currently located in the first region, it determines that there is a sensing task; or in a case where the first device determines that the region information included in the sensing information indicates that there is a sensing task in the first region, and the first device is currently located in the second region, it determines that there is no sensing task.

For example, in a case where the first device determines that the time information included in the sensing information indicates that there is a sensing task in the first time period, and the current time is within the first time period, it determines that there is a sensing task; or in a case where the first device determines that the time information included in the sensing information indicates that there is a sensing task in the first time period, and the current time is not within the first time period, then it determines that there is no sensing task.

In step S2104B, the second device determines whether there is a sensing task.

In some embodiments, the second device determines whether there is a sensing task according to the sensing information. Optionally, the sensing information is stored in the second device or obtained from the fifth response.

Optionally, the second device determines whether there is a sensing task according to the sensing information stored in the second device.

Optionally, the second device determines whether there is a sensing task according to the sensing information obtained from the fifth response.

In some embodiments, the second device determines whether there is a sensing task in a similar manner to that in which the first device determines whether there is a sensing task.

For example, in a case where the second device determines that the first indication information included in the sensing information indicates that there is a sensing task, it determines that there is a sensing task; or in a case where the second device determines that the first indication information included in the sensing information indicates that there is no sensing task, it determines that there is no sensing task.

For example, in a case where the second device determines that the region information included in the sensing information indicates that there is a sensing task in the first region, and the second device is currently located in the first region, it determines that there is a sensing task; or in a case where the second device determines that the region information included in the sensing information indicates that there is a sensing task in the first region, and the second device is currently located in the second region, it determines that there is no sensing task.

For example, in a case where the second device determines that the time information included in the sensing information indicates that there is a sensing task in the first time period, and the current time is within the first time period, it determines that there is a sensing task; or in a case where the second device determines that the time information included in the sensing information indicates that there is a sensing task in the first time period, and the current time is not within the first time period, it determines that there is no sensing task.

In some embodiments, a step S2104 includes the step S2104A and/or the step S2104B as described above.

In some embodiments, the second device or the first device sends a response. Optionally, sending a response by the second device or the first device may be a step S2105; and the step S2105 includes a step S2105A, a step S2105B and/or a step S2105C. Optionally, the response includes a first response, a second response and/or a third response.

In some embodiments, the terminal receives the response; or the first device receives the response.

In some embodiments, the response includes the sensing information.

In some embodiments, the response indicates a result of whether there is a sensing task.

In some embodiments, the name of the response is not limited, and it may be, for example, a sensing task response, a sensing task information response, or a sensing task detection result.

In step S2105A, the first device sends a first response to the terminal.

In some embodiments, the terminal receives the first response sent by the first device.

Optionally, the first response includes the sensing information.

In step S2105B, the second device sends a second response to the terminal via the first device.

In some embodiments, the terminal receives, via the first device, the second response sent by the second device.

Optionally, the second device sends the second response to the first device, and the first device forwards the second response to the terminal.

Optionally, the terminal receives the second response sent by the first device, and the second response is received by the first device from the second device.

Optionally, the second response includes the sensing information.

In step S2105C, the second device sends a third response to the terminal.

In some embodiments, the terminal receives the third response sent by the second device.

Optionally, the third response includes the sensing information.

In some optional embodiments, the first device sends a response. Optionally, the first device receives a second response sent by the second device, and sends the second response to the terminal.

In some optional embodiments, the terminal sends a first request to the first device; and the first device sends a first response to the terminal.

In some optional embodiments, the terminal sends a second request to the first device, and the first device sends the second request to the second device; the second device sends a second response to the first device, and the first device sends the second response to the terminal.

In some optional embodiments, the terminal sends a second request to the first device; and the first device sends a second response to the terminal.

In some optional embodiments, the terminal sends a third request to the second device; and the second device sends a third response to the terminal.

In some optional embodiments, the first device sends a fourth request to the second device; and the second device sends a fourth response to the first device.

In some optional embodiments, the second device sends a fifth request to the first device; and the first device sends a fifth response to the second device.

In some embodiments, the name of information is not limited to that recorded in embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" may be used interchangeably.

In some embodiments, "obtain", "acquire", "get", "receive", "transmission", "bidirectional transmission", "send and/or receive" are interchangeable, which may be interpreted as receiving from other entities, obtaining from a protocol, obtaining from a higher layer, acquiring by self-processing, autonomous implementation, and so on.

In some embodiments, terms such as "send", "transmit", "report", "distribute", "transmission", "bidirectional transmission", "send and/or receive" are interchangeable.

In some embodiments, terms such as "certain", "preset", "predetermined", "set", "indicated", "specific", "any", "first", etc. are interchangeable. Expressions like "certain A", "preset A", "predetermined A", "set A", "indicated A", "specific A", "any A", "first A" may be interpreted as A pre-defined in a protocol or A obtained based on setting, configuration, or indication, or may be interpreted as specific A, certain A, any A, or first A, etc., but the present invention is not limited thereto.

In some embodiments, determination or judgment may be made through a value of 1 bit (0 or 1) or a boolean represented by true or false, or may be made through a comparison of numerical values (such as comparison with a predetermined value), but the present invention is not limited thereto.

The method for information processing involved in embodiments of the present invention may include at least one of the steps S2101 to S2105. For example, the step S2101 may be implemented as an independent embodiment; the step S2102 may be implemented as an independent embodiment; the step S2103 may be implemented as an independent embodiment; the step S2104 may be implemented as an independent embodiment; the step S2105 may be implemented as an independent embodiment; the combination of the step S2101A and the step S2105A may be implemented as an independent embodiment; the combination of the step S2101B and the step S2105B may be implemented as an independent embodiment; the combination of the step S2101C and the step S2105C may be implemented as an independent embodiment; the combination of the step S2101A and the step S2102 may be implemented as an independent embodiment; the combination of the step S2101B and the step S2103 may be implemented as an independent embodiment; the combination of the step S2101C and the step S2103 may be implemented as an independent embodiment; the combination of the step S2101A and the step S2104A may be implemented independently as an embodiment; the combination of the step S2101B and the step S2104B may be implemented as an independent embodiment; the combination of the step S2101C and the step S2104B may be implemented as an independent embodiment; the combination of the steps S2101, S2102, S2104 and S2105 may be implemented as an independent embodiment; the combination of the steps S2101, S2103, S2104 and S2105 may be implemented as an independent embodiment; and the steps S2101 to S2105 may be implemented as an independent embodiment.

In some embodiments, the steps S2101, S2102, S2103 and S2105 may be optional, and one or more of these steps may be omitted or replaced in different embodiments.

In some embodiments, the steps S2102, S2103 and S2104 may be optional, and one or more of these steps may be omitted or replaced in different embodiments.

In some embodiments, the step S2102 and the step S2103 may be optional, and one or more of these steps may be omitted or replaced in different embodiments.

In some embodiments, the step S2102 and the step S2104 may be optional, and one or more of these steps may be omitted or replaced in different embodiments.

In embodiments of the present invention, each embodiment may be implemented individually or in combination with each other, and the steps in each embodiment may be distinguished in order.

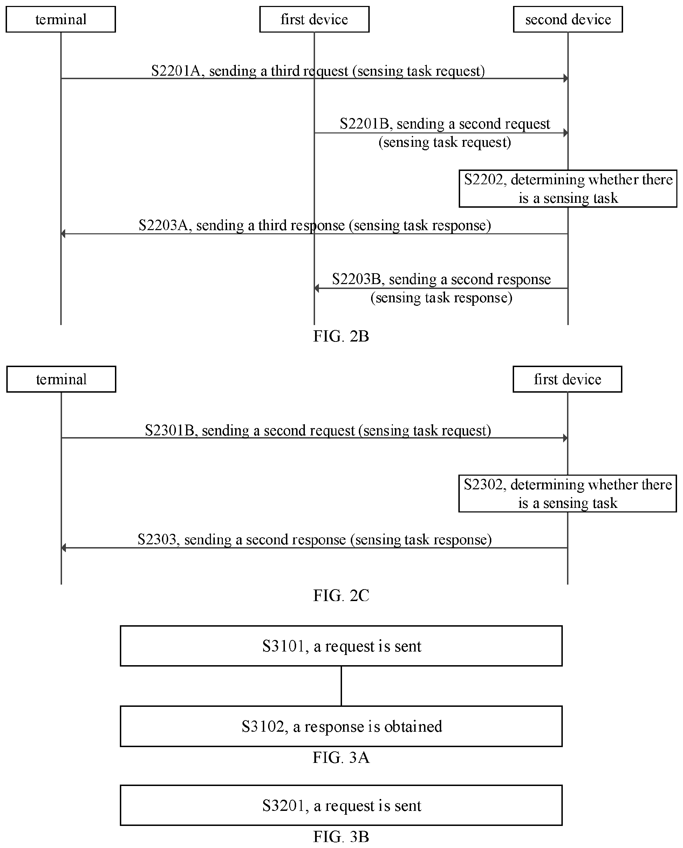

FIG. 2B is a schematic interactive diagram of a method for information processing according to embodiments of the present invention. As shown in FIG. 2B, the method for information processing involved in embodiments of the present invention is applicable to the information processing system 100, and the method includes one or more of the following operations.

In step S2201A, a terminal sends a third request to a second device.

For optional implementation manners of the step S2201A, reference may be made to optional implementation manners of the step S2101C in FIG. 2A and other related parts in embodiments involved in FIG. 2A, which will not be elaborated here.

In step S2201B, a first device sends a second request to the second device.

For optional implementation manners of the step S2201B, reference may be made to optional implementation manners of the step S2101B in FIG. 2A and other related parts in embodiments involved in FIG. 2A, which will not be elaborated here.

Optionally, the second request may be obtained by the first device from the terminal.

Optionally, a step S2201 includes the step S2201A and/or the step S2201B.

In step S2202, the second device determines whether there is a sensing task.

For optional implementation manners of the step S2202, reference may be made to optional implementation manners of the step S2104B in FIG. 2A and other related parts in embodiments involved in FIG. 2A, which will not be elaborated here.

In step S2203A, the second device sends a third response to the terminal.

For optional implementation manners of the step S2203A, reference may be made to optional implementation manners of the step S2105C in FIG. 2A and other related parts in embodiments involved in FIG. 2A, which will not be elaborated here.

In step S2203B, the second device sends a second response to the first device.

For optional implementation manners of the step S2203B, reference may be made to optional implementation manners of the step S2105B in FIG. 2A and other related parts in embodiments involved in FIG. 2A, which will not be elaborated here.

Optionally, the first device may send the second response to the terminal.

Optionally, a step S2203 includes the step S2203A and/or the step S2203B.

The method for information processing involved in embodiments of the present invention may include at least one of the steps S2201 to S2203. For example, the step S2201 may be implemented as an independent embodiment; the step S2202 may be implemented as an independent embodiment; the step S2203 may be implemented as an independent embodiment; the combination of the step S2201 and the step S2202 may be implemented as an independent embodiment; the combination of the step S2202 and the step S2203 may be implemented as an independent embodiment; the combination of the step S2201 and the step S2203 may be implemented as an independent embodiment; and the combination of the steps S2201, S2202 and S2203 may be implemented as an independent embodiment.

In embodiments of the present invention, each embodiment may be implemented individually or in combination with each other, and the steps in each embodiment may be distinguished in order.

FIG. 2C is a schematic interactive diagram of a method for information processing according to embodiments of the present invention. As shown in FIG. 2C, the method for information processing involved in embodiments of the present invention is applicable to the information processing system 100, and the method includes one or more of the following operations.

In step S2301, a terminal sends a second request to a first device.

For optional implementation manners of the step S2301, reference may be made to optional implementation manners of the step S2101B in FIG. 2A and other related parts in embodiments involved in FIG. 2A, which will not be elaborated here.

Optionally, the terminal sends a first request to the first device.

In step S2302, the first device determines whether there is a sensing task.

For optional implementation manners of the step S2302, reference may be made to optional implementation manners of the step S2104A in FIG. 2A and other related parts in embodiments involved in FIG. 2A, which will not be elaborated here.

In step S2303, the first device sends a second response to the terminal.

For optional implementation manners of the step S2303, reference may be made to optional implementation manners of the step S2105B in FIG. 2A and other related parts in embodiments involved in FIG. 2A, which will not be elaborated here.

Optionally, the first device sends a first response to the terminal.

The method for information processing involved in embodiments of the present invention may include at least one of the steps S2301 to S2303. For example, the step S2301 may be implemented as an independent embodiment; the step S2302 may be implemented as an independent embodiment; the step S2303 may be implemented as an independent embodiment; the combination of the step S2301 and the step S2302 may be implemented as an independent embodiment; the combination of the step S2302 and the step S2303 may be implemented as an independent embodiment; the combination of the step S2301 and the step S2303 may be implemented as an independent embodiment; and the combination of the step S2301, the step S2302 and the step S2303 may be implemented as an independent embodiment.

In embodiments of the present invention, each embodiment may be implemented individually or in combination with each other, and the steps in each embodiment may be distinguished in order.

FIG. 3A is a schematic flowchart of a method for information processing according to embodiments of the present invention. As shown in FIG. 3A, embodiments of the present invention relate to a method for information processing, which is performed by a terminal, and the method includes one or more of the following operations.

In step S3101, a request is sent. Optionally, the request includes a first request, a second request and/or a second request.

For optional implementation manners of the step S3101, reference may be made to optional implementation manners of the step S2101 (for example, the step S2101A, the step S2101B and/or the step S2101C) in FIG. 2A and other related parts in embodiments involved in FIG. 2A, which will not be repeated here.

In some embodiments, the terminal sends the first request to a first device, but embodiments of the present invention are not limited thereto, and the terminal may send the first request to other entities.

Optionally, the terminal sends the second request to a second device via the first device.

Optionally, the terminal sends the second request to the first device, and the second request is sent by the first device to the second device.

Optionally, the terminal sends a third request to the second device.

In step S3102, a response is obtained. Optionally, the response includes a first response, a second response and/or a third response.

For optional implementation manners of the step S3102, reference may be made to optional implementation manners of the step S2105 (for example, the step S2105A and/or the step S2105B and/or the step S2105C) in FIG. 2A and other related parts in embodiments involved in FIG. 2A, which will not be repeated here.

In some embodiments, the terminal receives a first response sent by a terminal, but embodiments of the present invention are not limited thereto, and the terminal may receive the first response sent by other entities.

In some embodiments, the terminal obtains a response specified by a protocol.

In some embodiments, the terminal obtains a response from one or more upper layers.

In some embodiments, the terminal performs processing to obtain a response.

In some embodiments, the step S3102 is omitted, and the terminal autonomously implements the function indicated in the response, or the above function is default or acquiescent.

Optionally, the terminal receives a second response sent by the first device.

Optionally, the terminal receives the second response sent by the first device; and the second response is received by the first device from the second device.

Optionally, the terminal receives a third response sent by the second device.

The method for information processing involved in embodiments of the present invention may include at least one of the step S3101 to the step S3102. For example, the step S3101 may be implemented as an independent embodiment, the step S3102 may be implemented as an independent embodiment, and the combination of the step S3101 and the step S3102 may be implemented as an independent embodiment.

In some embodiments, the step S3101 may be optional, and one or more of these steps may be omitted or replaced in different embodiments.

In some embodiments, the step S3102 may be optional, and one or more of these steps may be omitted or replaced in different embodiments.

FIG. 3B is a schematic flowchart of a method for information processing according to embodiments of the present invention. As shown in FIG. 3B, embodiments of the present invention relate to a method for information processing, which is performed by a terminal, and the method includes one or more of the following operations.

In step S3201, a request is sent.

For optional implementation manners of the step S3201, reference may be made to optional implementation manners of the step S2101 in FIG. 2A or the step S3101 in FIG. 3A, and other related parts in embodiments involved in FIG. 2A and FIG. 3A, which will not be repeated here.

In some embodiments, the request is configured for requesting sensing information.

In some embodiments, the request includes first indication information; and the first indication information indicates a request for the sensing information.

In some embodiments, sending the request includes at least one of: sending a first request to a first device; sending a second request to a second device via a first device; or sending a third request to a second device.

In some embodiments, the method further includes receiving a response, and the response includes the sensing information.

In some embodiments, the sensing information includes at least one of: second indication information, indicating whether there is a sensing task; region information, indicating a region where there is a sensing task; or time information, indicating a time period of a sensing task.

In some embodiments, receiving the response includes at least one of: receiving a first response sent by the first device; receiving, via the first device, a second response sent by the second device; or receiving a third response sent by the second device.

In some embodiments, the first device is a base station or an AMF; and/or the second device is an SF, an LMF, a GMLC, or other network functions specifically set up for a sensing service.

The above embodiments may be implemented individually or in combination with each other. For optional implementation manners, reference may be made to optional implementation manners of the steps in FIG. 2A and FIG. 3A, which will not be elaborated here.

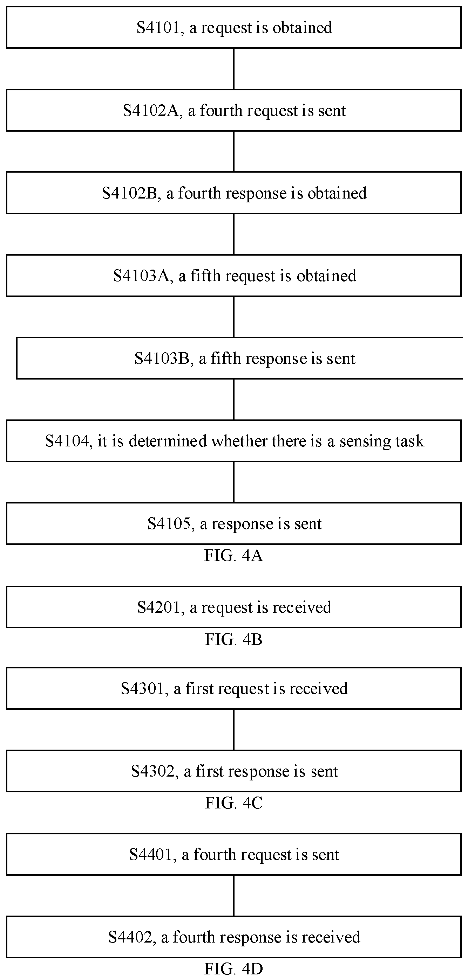

FIG. 4A is a schematic flowchart of a method for information processing according to embodiments of the present invention. As shown in FIG. 4A, embodiments of the present invention relate to a method for information processing, which is performed by a first device, and the method includes one or more of the following operations.

In step S4101, a request is obtained. Optionally, the request includes a first request and/or a second request.

For optional implementation manners of the step S4101, reference may be made to optional implementation manners of the step S2101A and/or the step S2101B in FIG. 2A and other related parts in embodiments involved in FIG. 2A, which will not be repeated here.

In some embodiments, the first device receives the first request sent by a terminal, but embodiments of the present invention are not limited thereto, and the first device may receive the first request sent by other entities.

In some embodiments, the first device obtains a request specified by a protocol.

In some embodiments, the first device obtains a request from one or more upper layers.

In some embodiments, the first device performs processing to obtain a request.

In some embodiments, the step S4101 is omitted, and the first device autonomously implements the function indicated by the request, or the above function is default or acquiescent.

Optionally, the first device receives the second request sent by a terminal; and the second request is configured to be sent by the first device to a second device.

In some optional embodiments, the first device sends the second request to the second device.

In step S4102A, a fourth request is sent.

For optional implementation manners of the step S4102A, reference may be made to optional implementation manners of the step S2102A in FIG. 2A and other related parts in embodiments involved in FIG. 2A, which will not be elaborated here.

In some embodiments, the first device sends the fourth request to the second device, but embodiments of the present invention are not limited thereto, and the first device may send the fourth request to other entities.

In step S4102B, a fourth response is obtained.

For optional implementation manners of the step S4102B, reference may be made to optional implementation manners of the step S2102B in FIG. 2A and other related parts in embodiments involved in FIG. 2A, which will not be elaborated here.

In some embodiments, the first device receives the fourth response sent by a terminal, but embodiments of the present invention are not limited thereto, and the first device may receive the fourth response sent by other entities.

In some embodiments, the first device obtains the fourth response specified by a protocol.

In some embodiments, the first device obtains the fourth response from one or more upper layers.

In some embodiments, the first device performs processing to obtain the fourth response.

In some embodiments, the step S4102B is omitted, and the first device autonomously implements the function indicated by the fourth response, or the above function is default or acquiescent.

In some embodiments, a step S4102 includes the step S4102A and the step S4102B.

In step S4103A, a fifth request is obtained.

For optional implementation manners of the step S4103A, reference may be made to optional implementation manners of the step S2103A in FIG. 2A and other related parts in embodiments involved in FIG. 2A, which will not be elaborated here.

In some embodiments, the first device receives the fifth request sent by a terminal, but embodiments of the present invention are not limited thereto, and the first device may receive the fifth request sent by other entities.

In some embodiments, the first device obtains the fifth request specified by a protocol.

In some embodiments, the first device obtains the fifth request from one or more upper layers.

In some embodiments, the first device performs processing to obtain the fifth request.

In some embodiments, the step S4103A is omitted, and the first device autonomously implements the function indicated by the fifth request, or the above function is default or acquiescent.

In step S4103B, a fifth response is sent.

For optional implementation manners of the step S4103B, reference may be made to optional implementation manners of the step S2103B in FIG. 2A and other related parts in embodiments involved in FIG. 2A, which will not be elaborated here.

In some embodiments, the first device sends the fifth response to the second device, but embodiments of the present invention are not limited thereto, and the first device may send the fifth response to other entities.

In some embodiments, a step S4103 includes the step S4103A and the step S4103B.

In step S4104, it is determined whether there is a sensing task.

For optional implementation manners of the step S4104, reference may be made to optional implementation manners of the step S2104A in FIG. 2A and other related parts in embodiments involved in FIG. 2A, which will not be elaborated here.

In step S4105, a response is sent. Optionally, the response includes a first response and/or a second response.

For optional implementation manners of the step S4105, reference may be made to optional implementation manners of the step S2105A and/or the step S2105B in FIG. 2A and other related parts in embodiments involved in FIG. 2A, which will not be repeated here.

In some embodiments, the first device sends the first response to the terminal, but embodiments of the present invention are not limited thereto, and the first device may send the first response to other entities.

Optionally, the first device sends the second response to the terminal; and the second response is received by the first device from the second device.

In some optional embodiments, before the step S4105, the first device obtains the second response.

In some embodiments, the first device receives the second response sent by the second device, but embodiments of the present invention are not limited to this, and the first device may receive the second response sent by other entities.

In some embodiments, the first device obtains the second response specified by a protocol.

In some embodiments, the first device obtains the second response from one or more upper layers.

In some embodiments, the first device performs processing to obtain the second response.

In some embodiments, the step of the first device obtaining the second response is omitted, the first device autonomously implements the function indicated by the second response, or the above function is default or acquiescent.

The method for information processing involved in embodiments of the present invention may include at least one of the steps S4101 to S4105. For example, the step S4101 may be implemented as an independent embodiment, the step S4102 may be implemented as an independent embodiment; the step S4103 may be implemented as an independent embodiment; the step S4104 may be implemented as an independent embodiment; the step S4105 may be implemented as an independent embodiment; the combination of the step S4101 and the step S4102 may be implemented as an independent embodiment; the combination of the step S4101 and the step S4103 may be implemented as an independent embodiment; the combination of the step S4101 and the step S4105 may be implemented as an independent embodiment; the combination of the step S4101, the step S4104 and the step S4105 may be implemented as an independent embodiment; and the steps S4101 to S4105 may be implemented as an independent embodiment.

In some embodiments, the steps S4101, S4102, S4103 and S4105 may be optional, and one or more of these steps may be omitted or replaced in different embodiments.

In some embodiments, the steps S4102, S4103 and S4104 may be optional, and one or more of these steps may be omitted or replaced in different embodiments.

In some embodiments, the steps S4102 and S4104 may be optional, and one or more of these steps may be omitted or replaced in different embodiments.

In some embodiments, the steps S4102 and S4103 may be optional, and one or more of these steps may be omitted or replaced in different embodiments.

In some embodiments, the steps S4102 and S4104 may be optional, and one or more of these steps may be omitted or replaced in different embodiments.

FIG. 4B is a schematic flowchart of a method for information processing according to embodiments of the present invention. As shown in FIG. 4B, embodiments of the present invention relate to a method for information processing, which is performed by a first device, and the method includes one or more of the following operations.

In step S4201, a request is received.

For optional implementation manners of the step S4201, reference may be made to optional implementation manners of the steps S2101A and/or S2101B in FIG. 2A or the step S4101 in FIG. 4A and other related parts in embodiments involved in FIG. 2A or FIG. 4A, which will not be repeated here.

In some embodiments, the request is configured for requesting sensing information.

In some embodiments, the request includes first indication information; and the first indication information indicates a request for the sensing information.

In some embodiments, receiving the request includes at least one of: receiving a first request sent by a terminal; or receiving a second request sent by a terminal, and the second request is configured to be sent to a second device.

In some embodiments, the method further includes: sending the second request to the second device.

In some embodiments, the method includes sending a fourth request to the second device, and the fourth request is configured for requesting sensing information.

In some embodiments, the method further includes receiving a fourth response sent by the second device, and the fourth response includes the sensing information.

In some embodiments, the method further includes: receiving a fifth request sent by the second device, and the fifth request is configured for obtaining sensing information.

In some embodiments, the method further includes: sending a fifth response to the second device, and the fifth response includes the sensing information.

In some embodiments, the method further includes one of: determining whether there is a sensing task according to sensing information stored in the first device; and determining whether there is a sensing task according to the sensing information obtained from the fourth response.

In some embodiments, the method further includes one of: sending a first response to the terminal, where the first response includes the sensing information; or sending a second response to the terminal, where the second response includes the sensing information, and the second response is received by the second device from the first device.

In some embodiments, the sensing information includes at least one of: second indication information, indicating whether there is a sensing task; region information, indicating a region where there is a sensing task; or time information, indicating a time period of a sensing task.

In some embodiments, the first device is a base station or an AMF; and/or the second device is an SF, an LMF, a GMLC or other network functions specifically set up for a sensing service.

The above embodiments may be implemented individually or in combination with each other. For optional implementation manners, reference may be made to optional implementation manners of the steps in FIG. 2A and FIG. 4A, which will not be elaborated here.

FIG. 4C is a schematic flowchart of a method for information processing according to embodiments of the present invention. As shown in FIG. 4C, embodiments of the present invention relate to a method for information processing, which is performed by a first device, and the method includes one or more of the following operations.

In step S4301, a first request is received.

For optional implementation manners of the step S4301, reference may be made to optional implementation manners of the step S2101A in FIG. 2A or the step S4101 in FIG. 4A, and other related parts in embodiments involved in FIG. 2A or FIG. 4A, which will not be repeated here.

In step S4302, a first response is sent.

For optional implementation manners of the step S4302, reference may be made to optional implementation manners of the step S2105A in FIG. 2A or the step S4105 in FIG. 4A, and other related parts in embodiments involved in FIG. 2A or FIG. 4A, which will not be repeated here.

The above embodiments may be implemented individually or in combination with each other. For optional implementation manners, reference may be made to optional implementation manners of the steps in FIG. 2A and FIG. 4A, which will not be elaborated here.

FIG. 4D is a schematic flowchart of a method for information processing according to embodiments of the present invention. As shown in FIG. 4D, embodiments of the present invention relate to a method for information processing, which is performed by a first device, and the method includes one or more of the following operations.

In step S4401, a fourth request is sent.

For optional implementation manners of the step S4401, reference may be made to optional implementation manners of the step S2102A in FIG. 2A or the step S4102A in FIG. 4A, and other related parts in embodiments involved in FIG. 2A or FIG. 4A, which will not be repeated here.

In step S4402, a fourth response is received.

For optional implementation manners of the step S4402, reference may be made to optional implementation manners of the step S2102B in FIG. 2A or the step S4102B in FIG. 4A, and other related parts in embodiments involved in FIG. 2A or FIG. 4A, which will not be repeated here.

The above embodiments may be implemented individually or in combination with each other. For optional implementation manners, reference may be made to optional implementation manners of the steps in FIG. 2A and FIG. 4A, which will not be elaborated here.

FIG. 4E is a schematic flowchart of a method for information processing according to embodiments of the present invention. As shown in FIG. 4E, embodiments of the present invention relate to a method for information processing, which is performed by a first device, and the method includes one or more of the following operations.

In step S4501, a fifth request is received.

For optional implementation manners of the step S4501, reference may be made to optional implementation manners of the step S2103A in FIG. 2A or the step S4103A in FIG. 4A, and other related parts in embodiments involved in FIG. 2A or FIG. 4A, which will not be repeated here.

In step S4502, a fifth response is sent.

For optional implementation manners of the step S4502, reference may be made to optional implementation manners of the step S2103B in FIG. 2A or the step S4103B in FIG. 4A, and other related parts in embodiments involved in FIG. 2A or FIG. 4A, which will not be repeated here.

The above embodiments may be implemented individually or in combination with each other. For optional implementation manners, reference may be made to optional implementation manners of the steps in FIG. 2A and FIG. 4A, which will not be elaborated here.

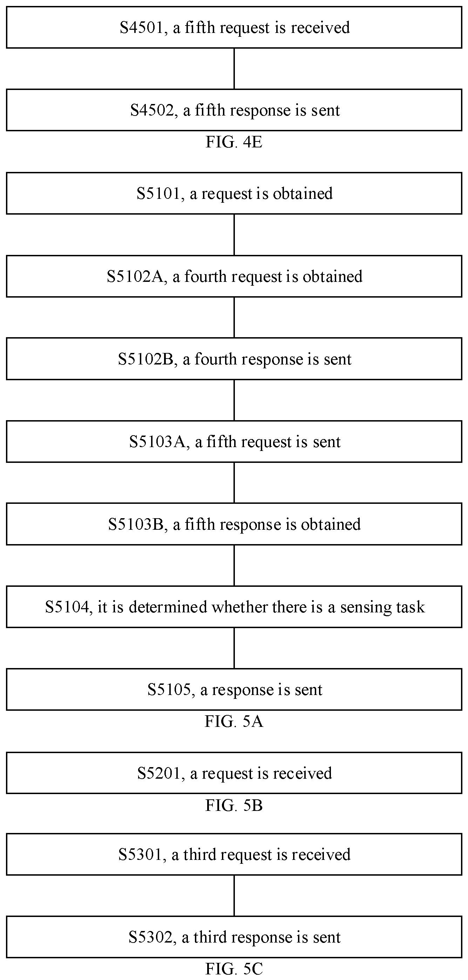

FIG. 5A is a schematic flowchart of a method for information processing according to embodiments of the present invention. As shown in FIG. 5A, embodiments of the present invention relate to a method for information processing, which is performed by a second device, and the method includes one or more of the following operations.

In step S5101, a request is obtained. Optionally, the request includes a second request and/or a third request.

For optional implementation manners of the step S5101, reference may be made to optional implementation manners of the step S2101B and the step S2101C in FIG. 2A, and other related parts in embodiments involved in FIG. 2A, which will not be elaborated here.

In some embodiments, the second device receives the third request sent by a terminal, but embodiments of the present invention are not limited thereto, and the second device may receive the third request sent by other entities.

In some embodiments, the second device obtains the request specified by a protocol.

In some embodiments, the second device obtains the request from one or more upper layers.

In some embodiments, the second device performs processing to obtain the request.

In some embodiments, the step S5101 is omitted, and the second device autonomously implements the function indicated by the request, or the above function is default or acquiescent.

Optionally, the second device receives the second request sent by a first device; and the second request is received by the first device from a terminal.

In step S5102A, a fourth request is obtained.

For optional implementation manners of the step S5102A, reference may be made to optional implementation manners of the step S2102A in FIG. 2A and other related parts in embodiments involved in FIG. 2A, which will not be elaborated here.

In some embodiments, the second device receives the fourth request sent by the first device, but embodiments of the present invention are not limited thereto, and the second device may receive the fourth request sent by other entities.

In some embodiments, the second device obtains the fourth request specified by a protocol.

In some embodiments, the second device obtains the fourth request from one or more upper layers.

In some embodiments, the second device performs processing to obtain the fourth request.

In some embodiments, the step S5102A is omitted, and the second device autonomously implements the function indicated by the fourth request, or the above function is default or acquiescent.

In step S5102B, a fourth response is sent.

For optional implementation manners of the step S5102B, reference may be made to optional implementation manners of the step S2102B in FIG. 2A and other related parts in embodiments involved in FIG. 2A, which will not be elaborated here.

In some embodiments, the second device sends the fourth response to the first device, but embodiments of the present invention are not limited thereto, and the second device may send the fourth response to other entities.

In some embodiments, a step S5102 includes the step S5102A and the step S5102B.

In step S5103A, a fifth request is sent.

For optional implementation manners of the step S5103A, reference may be made to optional implementation manners of the step S2103A in FIG. 2A and other related parts in embodiments involved in FIG. 2A, which will not be elaborated here.

In some embodiments, the second device sends the fifth request to the first device, but embodiments of the present invention are not limited thereto, and the second device may send the fifth request to other entities.

In step S5103B, a fifth response is obtained.

For optional implementation manners of the step S5103B, reference may be made to optional implementation manners of the step S2103B in FIG. 2A and other related parts in embodiments involved in FIG. 2A, which will not be elaborated here.

In some embodiments, the second device receives the fifth response sent by the first device, but embodiments of the present invention are not limited thereto, and the second device may receive the fifth response sent by other entities.

In some embodiments, the second device obtains the fifth response specified by a protocol.

In some embodiments, the second device obtains the fifth response from one or more upper layers.

In some embodiments, the second device performs processing to obtain the fifth response.

In some embodiments, the step S5103B is omitted, and the second device autonomously implements the function indicated by the fifth response, or the above function is default or acquiescent.

In some embodiments, a step S5103 includes the step S5103A and the step S5103B.

In step S5104, it is determined whether there is a sensing task.

For optional implementation manners of the step S5104, reference may be made to optional implementation manners of the step S2104B in FIG. 2A and other related parts in embodiments involved in FIG. 2A, which will not be elaborated here.

In step S5105, a response is sent.

For optional implementation manners of the step S5105, reference may be made to optional implementation manners of the step S2105B and/or the step S2105C in FIG. 2A and other related parts in embodiments involved in FIG. 2A, which will not be elaborated here.

In some embodiments, the second device sends a third response to the terminal, but embodiments of the present invention are not limited thereto, and the second device may send the third response to other entities.

Optionally, the second device sends a second response to the first device.

Optionally, the second device sends the second response to the first device, and the second response is sent by the first device to the terminal.

The method for information processing involved in embodiments of the present invention may include at least one of the steps S5101 to S5105. For example, the step S5101 may be implemented as an independent embodiment, the step S5102 may be implemented as an independent embodiment; the step S5103 may be implemented as an independent embodiment; the step S5104 may be implemented as an independent embodiment; the step S5105 may be implemented as an independent embodiment; the combination of the step S5101 and the step S5102 may be implemented as an independent embodiment; the combination of the step S5101 and the step S5103 may be implemented as an independent embodiment; the combination of the step S5101 and the step S5105 may be implemented as an independent embodiment; the combination of the step S5101, the step S5104 and the step S5105 may be implemented as an independent embodiment; the combination of the steps S5101 to S5105 may be implemented as an independent embodiment.

In some embodiments, the steps S5101, S5102, S5103 and S5105 may be optional, and one or more of these steps may be omitted or replaced in different embodiments.

In some embodiments, the steps S5102, S5103 and S5104 may be optional, and one or more of these steps may be omitted or replaced in different embodiments.

In some embodiments, the steps S5102 and S5104 may be optional, and one or more of these steps may be omitted or replaced in different embodiments.

In some embodiments, the steps S5102 and S5103 may be optional, and one or more of these steps may be omitted or replaced in different embodiments.

In some embodiments, the steps S5102 and S5104 may be optional, and one or more of these steps may be omitted or replaced in different embodiments.

FIG. 5B is a schematic flowchart of a method for information processing according to embodiments of the present invention. As shown in FIG. 5B, embodiments of the present invention relate to a method for information processing, which is performed by a second device, and the method includes one or more of the following operations.

In step S5201, a request is received.

For optional implementation manners of the step S5201, reference may be made to optional implementation manners of the steps S2101B and S2101C in FIG. 2A or the step S5101 in FIG. 5A, and other related parts in embodiments involved in FIG. 2A or FIG. 5A, which will not be elaborated here.

In some embodiments, the request is configured for requesting sensing information.

In some embodiments, the request includes first indication information; and the first indication information indicates a request for the sensing information.

In some embodiments, receiving the request includes at least one of: receiving a second request sent by a first device, where the second request is sent by a terminal to the first device; or receiving a third request sent by a terminal.

In some embodiments, the method further includes: receiving a fourth request sent by the first device, and the fourth request is configured for requesting sensing information.

In some embodiments, the method further includes: sending a fourth response to the first device, and the fourth response includes the sensing information.

In some embodiments, the method further includes: sending a fifth request to the first device, and the fifth request is configured for obtaining sensing information.

In some embodiments, the method further includes: receiving a fifth response sent by the first device, and the fifth response includes the sensing information.

In some embodiments, the method further includes one of: determining whether there is a sensing task according to sensing information stored in the second device; or determining whether there is a sensing task according to sensing information obtained from the fifth response.

In some embodiments, the method further includes one of: sending a second response to the first device, where the second response includes the sensing information, and the second response is sent by the first device to the terminal; or sending a third response to the terminal, where the third response includes the sensing information.

In some embodiments, the sensing information includes at least one of: second indication information, indicating whether there is a sensing task; region information, indicating a region where there is a sensing task; or time information, indicating a time period of a sensing task.

In some embodiments, the first device is a base station or an AMF; and/or the second device is an SF, an LMF, a GMLC or other network functions specifically set up for a sensing service.

The above embodiments may be implemented individually or in combination with each other. For optional implementation manners, reference may be made to optional implementation manners of the steps in FIG. 2A and FIG. 5A, which will not be elaborated here.

FIG. 5C is a schematic flowchart of a method for information processing according to embodiments of the present invention. As shown in FIG. 5C, embodiments of the present invention relate to a method for information processing, which is performed by a second device, and the method includes one or more of the following operations.

In step S5301, a third request is received.

For optional implementation manners of the step S5301, reference may be made to optional implementation manners of the step S2101C in FIG. 2A or the step S5101 in FIG. 5A, and other related parts in embodiments involved in FIG. 2A or FIG. 5A, which will not be repeated here.

In step S5302, a third response is sent.

For optional implementation manners of the step S5301, reference may be made to optional implementation manners of the step S2105C in FIG. 2A or the step S5105 in FIG. 5A, and other related parts in embodiments involved in FIG. 2A or FIG. 5A, which will not be repeated here.

The above embodiments may be implemented individually or in combination with each other. For optional implementation manners, reference may be made to optional implementation manners of the steps in FIG. 2A and FIG. 5A, which will not be elaborated here.

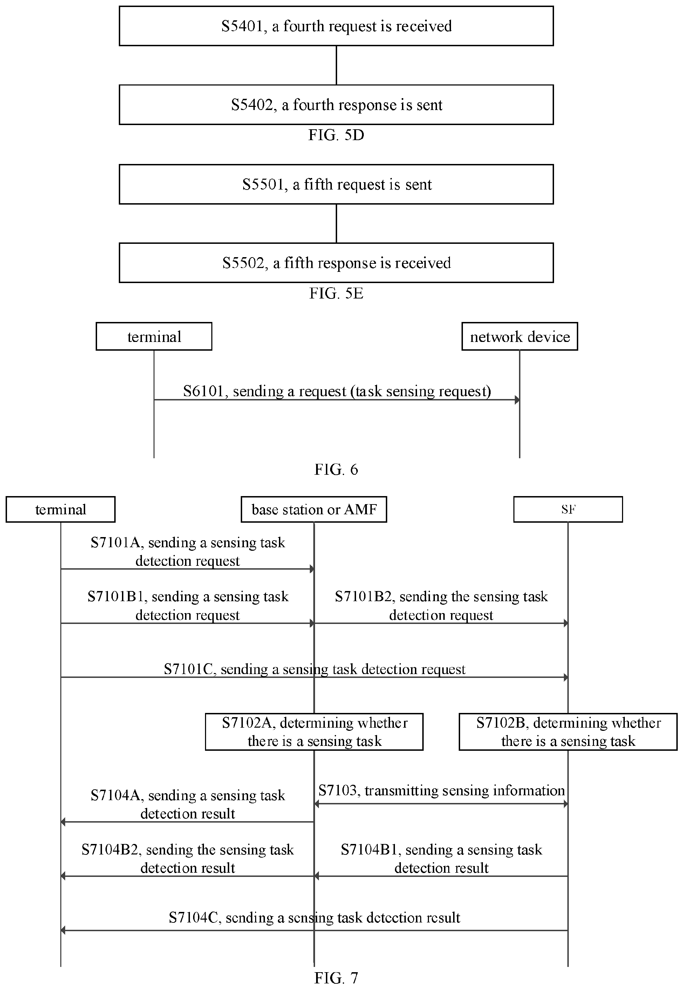

FIG. 5D is a schematic flowchart of a method for information processing according to embodiments of the present invention. As shown in FIG. 5D, embodiments of the present invention relate to a method for information processing, which is performed by a second device, and the method includes one or more of the following operations.

In step S5401, a fourth request is received.

For optional implementation manners of the step S5401, reference may be made to optional implementation manners of the step S2102A in FIG. 2A or the step S5102A in FIG. 5A, and other related parts in embodiments involved in FIG. 2A or FIG. 5A, which will not be repeated here.

In step S5402, a fourth response is sent.

For optional implementation manners of the step S5402, reference may be made to optional implementation manners of the step S2102B in FIG. 2A or the step S5102B in FIG. 5A, and other related parts in embodiments involved in FIG. 2A or FIG. 5A, which will not be repeated here.

The above embodiments may be implemented individually or in combination with each other. For optional implementation manners, reference may be made to optional implementation manners of the steps in FIG. 2A and FIG. 5A, which will not be elaborated here.

FIG. 5E is a schematic flowchart of a method for information processing according to embodiments of the present invention. As shown in FIG. 5D, embodiments of the present invention relate to a method for information processing, which is performed by a second device, and the method includes one or more of the following operations.

In step S5501, a fifth request is sent.

For optional implementation manners of the step S5501, reference may be made to optional implementation manners of the step S2103A in FIG. 2A or the step S5103A in FIG. 5A, and other related parts in embodiments involved in FIG. 2A or FIG. 5A, which will not be repeated here.

In step S5502, a fifth response is received.

For optional implementation manners of the step S5502, reference may be made to optional implementation manners of the step S2103B in FIG. 2A or the step S5103B in FIG. 5A, and other related parts in embodiments involved in FIG. 2A or FIG. 5A, which will not be repeated here.

The above embodiments may be implemented individually or in combination with each other. For optional implementation manners, reference may be made to optional implementation manners of the steps in FIG. 2A and FIG. 5A, which will not be elaborated here.

FIG. 6 is a schematic flowchart of a method for information processing according to embodiments of the present invention. As shown in FIG. 6, embodiments of the present invention relate to a method for information processing, and the method includes one or more of the following operations.

In step S6101, a terminal sends a request to a network device. Optionally, the request is configured for requesting sensing information.

For optional implementation manners of the step S5502, reference may be made to optional implementation manners of the step S2101 in FIG. 2A, the step S5101 in FIG. 4A or the step S5101 in FIG. 5A, and other related parts in embodiments involved in FIG. 2A, FIG. 4A or FIG. 5A, which will not be repeated here.

The above embodiments may be implemented individually or in combination with each other. For optional implementation manners, reference may be made to optional implementation manners of the steps in FIG. 2A, FIG. 4 and FIG. 5A, which will not be elaborated here.

FIG. 7 is a schematic flowchart of a method for information processing according to embodiments of the present invention. As shown in FIG. 7, embodiments of the present invention relate to a method for information processing, and the method includes one or more of the following operations.

Optionally, in order to detect a potential sensing task, a UE sends a sensing task detection request to a base station or an AMF; and/or a UE sends a sensing task detection request to a sensing function directly or via a base station or an AMF. Optionally, the UE is the terminal mentioned in previous embodiments.

In step S7101A, a UE sends a sensing task detection request to a base station or an AMF. Optionally, the sensing task detection request may be the first request in previous embodiments.

In step S7101B1, a UE sends a sensing task detection request to a base station or an AMF. Optionally, the sensing task detection request may be the second request in previous embodiments.

In step S7101B2, the base station or the AMF sends the sensing task detection request to an SF. Optionally, the sensing task detection request may be the second request in previous embodiments.

In step S7101C, the UE sends a sensing task detection request to an SF. Optionally, the sensing task detection request may be the third request in previous embodiments.

Optionally, the sensing task detection request includes a sensing task detection indication; and the sensing task detection indication may be the first indication information in previous embodiments. The sensing task detection request is configured for requesting an indication of a sensing task; and the sensing task detection request may also include region information and/or time information.

In step S7102A, the base station or the AMF determines whether there is a sensing task.

Optionally, the base station or the AMF determines whether there is a sensing task according to sensing information.

In step S7102B, the SF determines whether there is a sensing task.

Optionally, the SF determines whether there is a sensing task according to sensing information.

In step S7103, the sensing information is transmitted between the base station (or the AMF) and the SF.

Optionally, the base station or the AMF sends the sensing information to the SF that needs to do sensing task detection; or the SF sends the sensing information to the base station or the AMF that needs to do sensing task detection.

Optionally, the step S7103 may be performed before the step S7102A and/or the step S7102B.

Optionally, the base station, the AMF or the SF may send a sensing task detection result to the UE directly; and/or the SF sends a sensing task detection result via the base station or the AMF.

In step S7104A, the base station or the AMF sends a sensing task detection result to the UE. Optionally, the sensing task detection result may be the first response in previous embodiments.

In step S7104B1, the SF sends a sensing task detection result to the base station or the AMF. Optionally, the sensing task detection result may be the second response in previous embodiments.

In step S7104B2, the base station or the AMF sends the sensing task detection result to the UE. Optionally, the sensing task detection result may be the second response in previous embodiments.

In step S7104C, the SF sends a sensing task detection result to the UE. Optionally, the sensing task detection result may be the third response in previous embodiments.

Optionally, the sensing task detection result at least indicates whether there is a sensing task. Optionally, the sensing task detection result includes sensing information.

In embodiments of the present invention, part or all of the steps and their optional implementation manners may be arbitrarily combined with part or all of the steps in other embodiments, and may also be arbitrarily combined with optional implementation manners of other embodiments.

Embodiments of the present invention relate to a method for information processing, which includes one or more of the following operations.

In some embodiments, a UE may detect a potential sensing task with the help of a core network; and/or an AMF or an SF may detect a potential sensing task based on the sensing information. Optionally, the UE is the terminal in previous embodiments.

In some embodiments, the UE sends a sensing task detection request to the base station or the AMF.

In some embodiments, the UE sends a sensing task detection request to the SF directly or via the base station or the AMF.

In some embodiments, the UE receives a sensing task detection result from the base station, the AMF or the SF.

In some embodiments, the AMF receives a sensing task detection request from the UE.

In some embodiments, the AMF sends the sensing task detection request to the SF.

In some embodiments, the AMF determines whether there is a sensing task according to the sensing information.

In some embodiments, an AMF that needs to do potential sensing task detection obtains sensing information from the SF.

In some embodiments, the AMF sends the sensing information to an SF that needs to do potential sensing task detection.

In some embodiments, the AMF sends a sensing task detection result to the UE.

In some embodiments, the AMF obtains the sensing task detection result from the SF.

In some embodiments, the base station receives a sensing task detection request from the UE.

In some embodiments, the base station determines whether there is a sensing task according to the sensing information.

In some embodiments, the base station sends a sensing task detection result to the UE.

In some embodiments, the SF receives a sensing task detection request from the UE.

In some embodiments, the SF receives a sensing task detection request from the AMF.

In some embodiments, the SF determines whether there is a sensing task according to the sensing information.

In some embodiments, an SF that needs to do potential sensing task detection obtains sensing information from the AMF.

In some embodiments, the SF sends the sensing information to the AMF that needs to do potential sensing task detection.

In some embodiments, the SF sends a sensing task detection result to the UE directly.

In some embodiments, the SF sends a sensing task detection result to the UE via the base station or the AMF.

Optionally, the sensing task detection request includes a sensing task detection indication; and the sensing task detection request is configured for requesting an indication of a sensing task.

Optionally, the sensing task detection request may be the request in previous embodiment; and the sensing task detection result may be the response in previous embodiments.

Optionally, the sensing task detection result at least indicates whether there is a sensing task. Optionally, the sensing task detection result includes the sensing information.

In embodiments of the present invention, part or all of the steps and their optional implementation manners may be arbitrarily combined with part or all of the steps in other embodiments, and may also be arbitrarily combined with optional implementation manners of other embodiments.

Embodiments of the present invention further provide an apparatus for implementing any of the above methods. For example, an apparatus is provided, and the apparatus includes one or more units or modules for implementing individual steps performed by a terminal as described in any of the above methods. For another example, another apparatus is provided, which includes one or more units or modules for implementing individual steps performed by a network device (such as an access network device, a core network function node, a core network device, etc.) as described in any of the above methods.

It should be understood that the division of the units or modules in the above apparatuses is only a division of logical functions, and all or part of these units or modules may be integrated into one physical entity or may be physically separated as required in implementation. In addition, the units or modules in the apparatus may be implemented in the form of processor calling software: for example, the apparatus includes a processor, the processor is connected to a memory, instructions are stored in the memory, and the processor calls the instructions stored in the memory to implement any of the above methods or implement the functions of various units or modules of the above apparatus. The processor is, for example, a general-purpose processor, such as a central processing unit (CPU) or a microprocessor, and the memory is a memory inside or outside the apparatus. Alternatively, the units or modules in the apparatus may be implemented in the form of hardware circuit, and the hardware circuit may be designed to implement the functions of some or all of the units or modules. The above hardware circuit may be understood as one or more processors. For example, in an implementation, the above hardware circuit is an application-specific integrated circuit (ASIC), and the functions of some or all of the above units or modules are realized by designing the logical relationship of components in the circuit. For example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units or modules. All units or modules of the above apparatus may be realized in the form of processor calling software or in the form of hardware circuit, or a part of them may be realized in the form of processor calling software, and the rest may be realized in the form of hardware circuit.

In embodiments of the present invention, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of hardware circuits, and the logical relationship of the hardware circuits is fixed or reconfigurable. For example, the processor is a hardware circuit implemented by an application-specific integrated circuit (ASIC) or a programmable logic device (PLD), such as FPGA. In a reconfigurable hardware circuit, the processor loads a configuration file to implement the process of hardware circuit configuration, which may be understood as a process where the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

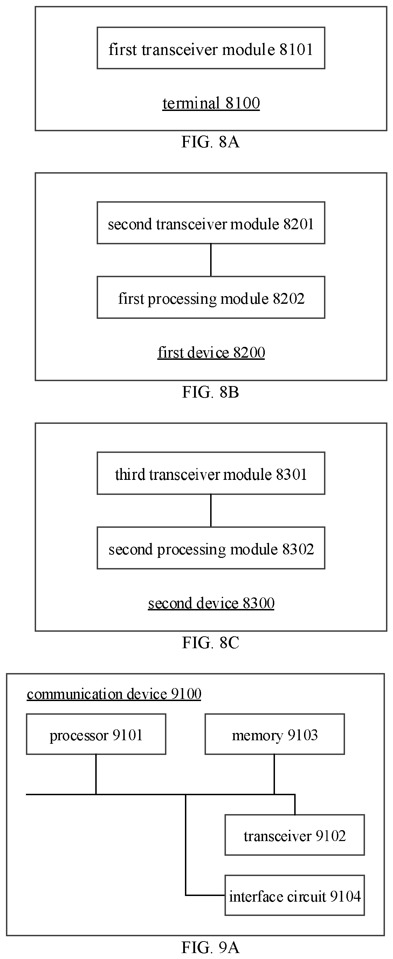

FIG. 8A is a schematic block diagram of a terminal 8100 according to embodiments of the present invention. As shown in FIG. 8A, the terminal 8100 includes: a first transceiver module 8101. In some embodiments, the first transceiver module 8101 is configured to send a request. Optionally, the first transceiver module 8101 is configured to perform at least one of sending and/or receiving steps (such as, but not limited thereto, the steps S2101 and/or S2105, but not limited thereto) performed by the first device in any of the above methods, which will not be repeated here.

FIG. 8B is a schematic block diagram of a first device 8200 according to embodiments of the present invention. As shown in FIG. 8B, the first device 8200 includes: at least one of a second transceiver module 8201 and a first processing module 8202. Optionally, the second transceiver module 8201 is configured to receive a request. Optionally, the second transceiver module 8201 is configured to perform at least one of sending and/or receiving steps (such as, but not limited thereto, the steps S2101, S2102, S2103 and/or S2105) performed by the first device in any of the above methods, which will not be repeated here. Optionally, the first processing module 8202 is configured to perform at least one of the processing steps (such as, but not limited thereto, the step S2104A) performed by the first device in any of the above methods, which will not be repeated here.

FIG. 8C is a schematic block diagram of a second device 8300 according to embodiments of the present invention. As shown in FIG. 8C, the second device 8300 includes: at least one of a third transceiver module 8301 and a second processing module 8302. The third transceiver module 8301 is configured to receive a request. Optionally, the third transceiver module 8301 is configured to perform at least one of the sending and/or receiving steps (such as, but not limited thereto, the steps S2101, S2102, S2103 and/or S2105) performed by the second device in any of the above methods, which will not be repeated here. Optionally, the second processing module 8302 is configured to perform at least one of the processing steps (such as, but not limited thereto, the step S2104) performed by the second device in any of the above methods, which will not be repeated here.

In some embodiments, the transceiver module may include a sending module and/or a receiving module, and the sending module and the receiving module may be separate or integrated. Optionally, the transceiver module may be interchangeable with the transceiver. For example, the first transceiver module includes a first sending module and/or a first receiving module. For example, the second transceiver module includes a second sending module and/or a second receiving module.

In some embodiments, the processing module may be a single module or may include multiple sub-modules. Optionally, the multiple sub-modules perform all or part of the steps required to be performed by the processing module, respectively. Optionally, the processing module is interchangeable with a processor.

FIG. 9A is a schematic block diagram of a communication device 9100 according to embodiments of the present invention. The communication device 9100 may be a network device (e.g., an access network device, a core network device, a first network element, a second network element, etc.); a terminal (e.g., a user equipment, etc.); a chip, chip system or processor that supports a network device to implement any of the above methods; or a chip, chip system or processor that supports a terminal to implement any of the above methods. The communication device 9100 may be configured to implement the method described in the above method embodiments, and for details, reference may be made to the description in the above method embodiments.

As shown in FIG. 9A, the communication device 9100 includes one or more processors 9101. The processor 9101 may be a general-purpose processor or a dedicated processor, etc. For example, the processor 9101 may be a baseband processor or a central processing unit. The baseband processor may be configured to process the communication protocol and the communication data, and the central processing unit may be configured to control the communication device (such as a base station, a baseband chip, a terminal, a terminal chip, a DU or a CU, etc.), execute a program, and process the data of the program. Optionally, the communication device 9100 is configured to perform any of the above methods. Optionally, one or more processors 9101 are configured to call instructions to cause the communication device 9100 to perform any of the above methods.

In some embodiments, the communication device 9100 further includes one or more transceivers 9102. In a case where the communication device 9100 includes one or more transceivers 9102, the one or more transceivers 9102 perform at least one of the communication steps including sending and/or receiving steps (for example, but not limited to, the steps S2101, S2102, S2103, S2104, S2105 and/or S2107) as described in the above methods, and the processor 9101 performs at least one of other steps (for example, but not limited to, the step S2106). In optional embodiments, the transceiver may include a receiver and/or a transmitter, and the receiver and the transmitter may be separate or integrated together. Optionally, terms such as transceiver, transceiver unit, transceiver machine, transceiver circuit, interface circuit, interface, etc. are interchangeable, terms such as transmitter, transmitting unit, transmitting machine, transmitting circuit, etc. are interchangeable, and terms such as receiver, receiving unit, receiving machine, receiving circuit, etc. are interchangeable.

In some embodiments, the communication device 9100 further includes one or more memories 9103 for storing data. Optionally, all or part of the one or more memories 9103 may also be set outside the communication device 9100. In optional embodiments, the communication device 9100 may include one or more interface circuits 9104. Optionally, the interface circuit 9104 is connected to the memory 9103, and may be used to receive data from the memory 9103 or other devices, and may be used to send data to the memory 9103 or other devices. For example, the interface circuit 9104 may read data stored in the memory 9103 and send the data to the processor 9101.

The communication device 9100 described in the above embodiments may be a network device or a terminal, but the scope of the communication device 9100 described in the present invention is not limited thereto, and the structure of the communication device 9100 may not be limited by FIG. 9A. The communication device may be a stand-alone device or may be a part of a larger device. For example, the communication device may be: 1) a stand-alone integrated circuit (IC), a chip, or a chip system or subsystem; (2) a set of one or more ICs, optionally, the set of one or more ICs may also include a storage component for storing data or programs; (3) an ASIC, such as a Modem; (4) a module that may be embedded in other devices; (5) a receiver, a terminal, an intelligent terminal, a cellular phone, a wireless device, a handheld machine, a mobile unit, a vehicle-mounted device, a network device, a cloud device, an artificial intelligence device, etc.; (9) others.

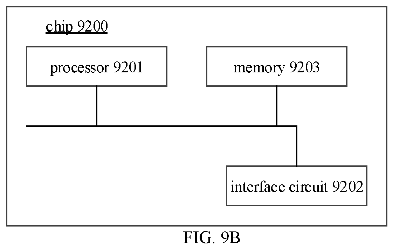

FIG. 9B is a schematic block diagram of a chip 9200 according to embodiments of the present invention. For the case where the communication device 9100 may be a chip or chip system, reference may be made to the schematic block diagram of the chip 9200 shown in FIG. 9B, but the present invention is not limited thereto.

The chip 9200 includes one or more processors 9201. The chip 9200 is configured to perform any of the above methods.

In some embodiments, the chip 9200 further includes one or more interface circuits 9202. Optionally, terms such as interface circuit, interface, transceiver pin, etc. are interchangeable. In some embodiments, the chip 9200 also includes one or more memories 9203 for storing data. Optionally, all or part of the one or more memories 9203 may be set outside the chip 9200. Optionally, the interface circuit 9202 is connected to the memory 9203, and the interface circuit 9202 may be used to receive data from the memory 9203 or other devices, and may also be used to send data to the memory 9203 or other devices. For example, the interface circuit 9202 may read data stored in the memory 9203 and send the data to the processor 9201.

In some embodiments, the interface circuit 9202 performs at least one of the communication steps including sending and/or receiving steps (for example, but not limited to, the steps S2101, S2102, S2103, S2104, S2105 and/or S2107) as described in the above methods. The interface circuit 9202 performs at least one of the communication steps including sending and/or receiving steps as described in the above methods, which for example refers to that the interface circuit 9202 performs interactions of data among the processor 9201, the chip 9200, the memory 9203 or a transceiver component. In some embodiments, the processor 9201 performs at least one of other steps (such as, but not limited to, the step S2103).

Modules and/or components as described in various embodiments of virtual devices, physical devices, chip, etc. may be combined or separated arbitrarily as required. Optionally, some or all of the steps may also be performed collaboratively by multiple modules and/or components, which is not limited herein.

The present invention also provides a storage medium having stored therein instructions that, when run on a communication device 9100, cause the communication device 9100 to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a temporary storage medium.

The present invention also provides a program product that, when executed by a communication device 9100, causes the communication device 9100 to perform any of the above methods. Optionally, the program product is a computer program product.

The present invention also provides a computer program that, when run on a computer, causes the computer to perform any one of the above methods.

## Claims

1. A method for information processing, performed by a terminal, comprising:
sending a request, wherein the request is configured for requesting sensing information.

2. The method according to claim 1, wherein the request comprises first indication information; and the first indication information indicates a request for the sensing information.

3. The method according to claim 1 or 2, wherein sending the request comprises at least one of:
sending a first request to a first device;
sending a second request to a second device via a first device; or
sending a third request to a second device.

4. The method according to any one of claims 1 to 3, further comprising:
receiving a response, wherein the response comprises the sensing information.

5. The method according to any one of claims 1 to 4, wherein the sensing information comprises at least one of:
second indication information, indicating whether there is a sensing task;
region information, indicating a region where there is a sensing task; or
time information, indicating a time period of a sensing task.

6. The method according to claim 4, wherein receiving the response comprises at least one of:
receiving a first response sent by a first device;
receiving, via a first device, a second response sent by a second device; or
receiving a third response sent by a second device.

7. The method according to claim 3 or 6, wherein
the first device is a base station or an access and mobility management function (AMF); and/or
the second device is a sensing function (SF), a location management function (LMF), a gateway mobile location center (GMLC), or other network functions set up for a sensing service.

8. A method for information processing, performed by a first device, comprising:
receiving a request, wherein the request is configured for requesting sensing information.

9. The method according to claim 8, wherein the request comprises first indication information;
and the first indication information indicates a request for the sensing information.

10. The method according to claim 8 or 9, wherein receiving the request comprises at least one of:
receiving a first request sent by a terminal; or
receiving a second request sent by a terminal, wherein the second request is configured to be sent to a second device.

11. The method according to claim 10, further comprising: sending the second request to the second device.

12. The method according to any one of claims 8 to 11, comprising:
sending a fourth request to a second device, wherein the fourth request is configured for requesting sensing information.

13. The method according to claim 12, further comprising:
receiving a fourth response sent by the second device, wherein the fourth response comprises the sensing information.

14. The method according to any one of claims 8 to 11, further comprising:
receiving a fifth request sent by a second device, wherein the fifth request is configured for obtaining sensing information.

15. The method according to claim 14, further comprising:
sending a fifth response to the second device, wherein the fifth response comprises the sensing information.

16. The method according to any one of claims 8 to 15, further comprising one of:
determining whether there is a sensing task according to sensing information stored in the first device; or
determining whether there is a sensing task according to sensing information obtained from a fourth response.

17. The method according to any one of claims 8 to 16, further comprising one of:
sending a first response to a terminal; wherein the first response comprises the sensing information; or
sending a second response to a terminal; wherein the second response comprises the sensing information; and the second response is received by a second device from the first device.

18. The method according to any one of claims 8 to 17, wherein the sensing information comprises at least one of:
second indication information, indicating whether there is a sensing task;
region information, indicating a region where there is a sensing task; or
time information, indicating a time period of a sensing task.

19. The method according to any one of claims 8 to 18, wherein
the first device is a base station or an access and mobility management function (AMF); and/or
the second device is a sensing function (SF), a location management function (LMF), a gateway mobile location center (GMLC), or other network functions set up for a sensing service.

20. A method for information processing, performed by a second device, comprising:
receiving a request, wherein the request is configured for requesting sensing information.

21. The method according to claim 20, wherein the request comprises first indication information; and the first indication information indicates a request for the sensing information.

22. The method according to claim 20 or 21, wherein receiving the request comprises at least one of:
receiving a second request sent by a first device; wherein the second request is sent by a terminal to the first device; or
receiving a third request sent by a terminal.

23. The method according to any one of claims 20 to 22, further comprising:
receiving a fourth request sent by a first device, wherein the fourth request is configured for requesting sensing information.

24. The method according to claim 23, further comprising:
sending a fourth response to the first device, wherein the fourth response comprises the sensing information.

25. The method according to any one of claims 20 to 22, further comprising:
sending a fifth request to a first device, wherein the fifth request is configured for obtaining sensing information.

26. The method according to claim 25, further comprising:
receiving a fifth response sent by the first device, wherein the fifth response comprises the sensing information.

27. The method according to any one of claims 20 to 26, further comprising one of:
determining whether there is a sensing task according to sensing information stored in the second device; or
determining whether there is a sensing task according to sensing information obtained from a fifth response.

28. The method according to any one of claims 20 to 27, further comprising one of:
sending a second response to a first device; wherein the second response comprises the sensing information; and the second response is configured to be sent to a terminal by the first device; or
sending a third response to a terminal; wherein the third response comprises the sensing information.

29. The method according to any one of claims 20 to 28, wherein the sensing information comprises at least one of:
second indication information, indicating whether there is a sensing task;
region information, indicating a region where there is a sensing task; or
time information, indicating a time period of a sensing task.

30. The method according to any one of claims 20 to 29, wherein
the first device is a base station or an access and mobility management function (AMF); and/or
the second device is a sensing function (SF), a location management function (LMF), a gateway mobile location center (GMLC), or other network functions set up for a sensing service.

31. A method for information processing, comprising:
sending, by a terminal, a request to a network device,
wherein the request is configured for requesting sensing information.

32. A terminal, comprising:
a first transceiver module, configured to send a request,
wherein the request is configured for requesting sensing information.

33. A first device, comprising:
a second transceiver module, configured to receive a request,
wherein the request is configured for requesting sensing information.

34. A second device, comprising:
a third receiving module, configured to receive a request,
wherein the request is configured for requesting sensing information.

35. A communication device, comprising:
one or more processors;
wherein the communication device is configured to perform the method for information processing according to any one of claims 1 to 7, claims 8 to 19, claims 20 to 30, or claim 31.

36. A communication system, comprising:
a terminal, configured to perform the method for information processing according to any one of claims 1 to 7;
a first device, configured to perform the method for information processing according to any one of claims 8 to 19; and
a second device, configured to perform the method for information processing according to any one of claims 20 to 30.

37. A storage medium having stored therein instructions that, when run on a communication device, cause the communication device to perform the method for information processing according to any one of claims 1 to 7, claims 8 to 19, claims 20 to 30, or claim 31.
